# EUROPÄISCHE PATENTSCHRIFT

(11) **EP 2 801 251 B1**
(45) Veröffentlichungstag und Bekanntmachung des Hinweises auf die Patenterteilung: **12.07.2017**
(21) Anmeldenummer: 14167684.1
(22) Anmeldetag: 09.05.2014
(51) Int. Cl.: A01K 1/01

(54) **Sanitäre Vorrichtung für Haustiere**
Sanitary device for domestic animals
Dispositif sanitaire pour animaux domestiques

(30) Priorität: 10.05.2013 CH 9352013
(43) Veröffentlichungstag der Anmeldung: 12.11.2014
(73) Patentinhaber: Balada Llobat, Marc, 3303 Münchringen (CH)
(72) Erfinder: Balada Llobat, Marc, 3303 Münchringen (CH)
(74) Vertreter: BOVARD AG

(56) Entgegenhaltungen:
- CN-A- 1 628 508
- KR-B1- 101 157 038
- US-A- 3 734 057
- US-A- 3 842 803
- US-A- 5 494 001

## Beschreibung

### Sachgebiet der Erfindung

Die vorliegende Erfindung bezieht sich auf eine sanitäre Vorrichtung für Haustiere, welche derart ausgebildet ist, dass sie mobil bzw. tragbar ist. Die sanitäre Vorrichtung im Sinne dieser Erfindung ist besonders geeignet für Hunde, aber selbstverständlich kann sie auch für andere Haustiere verwendet werden.

### Stand der Technik

Seit langer Zeit haben Menschen Tiere domestiziert. Heute vermutet man, dass man als erste Tiere überhaupt Wölfe an das gemeinsame Leben mit den Menschen gewöhnt hat, um sie vor allem als Jagdhelfer zu verwenden, woraus sich mit der Zeit Hunde entwickelt haben. Etwas später sind andere Tierarten dazu gestossen, vor allem Nutztiere wie Schafe, Ziegen oder Rinder. Weitere domestizierte Tiere sind zum Beispiel Katzen, Hühner, usw.

Mittlerweile halten Menschen Tiere aber nicht nur aus ökonomischen bzw. Nutzungsinteressen, sondern vor allem aus sozialen Beweggründen. Dies stimmt insbesondere bei den echten Haustieren, also bei solchen Tieren, welche mit Menschen in einem gemeinsamen Haushalt leben.

Man schätzt, dass in deutschen Haushalten heute über 23 Millionen Haustiere leben, wovon Katzen und Hunde einen grossen Teil ausmachen. Für viele Menschen sind diese Tiere aber mehr als "nur" ein Haustier, weil sie meist fehlende Freunde oder Familienmitglieder ersetzen, und ihnen dabei helfen, die Einsamkeit zu überwinden. In der Schweiz ist die Situation ähnlich: als Haustiere leben in der Schweiz etwa 1,35 Millionen Katzen und eine halbe Million Hunde.

Nun haben auch Haustiere (z.B. Hunde und Katzen) physiologische Bedürfnisse, welche befriedigt werden müssen. Um die Hygiene im Haus (oder in der Wohnung) des Besitzers zu gewährleisten, bringt man in der Regel noch jungen Tieren bei, diese Bedürfnisse während eines Aussenspaziergangs, und nicht im Haus, zu erledigen.

Leider können es sich heute viele Haustierbesitzer wegen ihrer stressigen Lebensweise nicht mehr leisten, sich genug Zeit für ihre Haustiere zu nehmen und mit diesen regelmässig spazieren zu gehen. Aus dem Grund besteht der Bedarf, den Haustieren eine Möglichkeit zur Verfügung zu stellen, ihre physiologischen Bedürfnisse unabhängig von ihren Besitzern, insbesondere auch zu Hause, zu befriedigen.

Für Katzen bestehen zwar schon längere Zeit Vorrichtungen, in welchen sie ihren Stuhlgang (und/oder ihren Urin) ablegen und vergraben können. Solche bekannten Vorrichtungen basieren in der Regel auf der Tatsache, dass Katzen einen natürlichen Trieb verspüren, ihre Exkremente vor ihren Artgenossen zu verstecken. In diesem Sinne bestehen diese so genannten Katzenklos aus einem Gefäss, in welchem ein besonderes Material bereitgestellt wird. Dieses Material, die so genannte Katzenstreu, besteht meistens aus porösen Tonmineralien, welche eine grosse Saugkraft besitzen.

Allerdings bleiben die Exkremente in diesen Katzenklos liegen und müssen für eine hygienische Umgebung regelmässig gereinigt werden. Dabei werden normalerweise Exkremente zusammen mit der verunreinigten Katzenstreu mit einer Schaufel abgetragen und im Abfall entsorgt. Deshalb muss Katzenstreu regelmässig nachgefüllt werden, weswegen die Kosten für einen solchen Katzenklo nicht vernachlässigt werden dürfen. Ausserdem sind diese Katzenklos für Hunde wenig geeignet.

Die Dokumente US 3 842 803 A, KR 101 157 038 B1, US 5 494 001 A und CN 1 628 508 A beschreiben verschiedene sanitäre Vorrichtungen für Haustiere.

### Zusammenfassung der Erfindung

Es ist also eine Aufgabe der vorliegenden Erfindung, eine sanitäre Vorrichtung für Haustiere vorzuschlagen, dank welcher insbesondere die oben beschriebenen Nachteile der aktuell bekannten sanitären Vorrichtungen entweder vollständig überwunden oder zumindest stark vermindert sind.

Insbesondere ist eine Aufgabe der vorliegenden Erfindung, eine sanitäre Vorrichtung für Haustiere zur Verfügung zu stellen, welche es den Hunden ermöglicht, ihre physiologischen Bedürfnisse auf eine hygienische Weise, zu Hause, und ohne Zutun der Besitzer, zu verrichten.

Gemäss der vorliegenden Erfindung wird diese Aufgabe insbesondere durch die Elemente des unabhängigen Anspruchs 1 erreicht. Weitere vorteilhafte Ausführungsformen gehen zudem aus den abhängigen Ansprüchen und der Beschreibung hervor.

Insbesondere werden diese Ziele der vorliegende Erfindung durch eine sanitäre Vorrichtung für Haustiere mit einer Oberfläche, welche Haustiere besteigen und auf welcher sie Exkremente abscheiden können, erreicht, indem die sanitäre Vorrichtung mindestens einen Sensor umfasst, mittels welchem die Anwesenheit von Exkrementen auf und/oder das Absteigen des Haustiers von der Oberfläche erfassbar sind, wobei beim Erfassen der Anwesenheit der Exkremente auf und/oder des Absteigens des Haustiers von der Oberfläche ein Spülmittel derart auf die Oberfläche abgebbar ist, dass die darauf präsenten Exkremente von der Oberfläche wegspülbar sind, wobei die sanitäre Vorrichtung einen Abwasser-Behälter umfasst, in welchem die von der Oberfläche weggespülten Exkremente und das Spülmittel entsorgbar sind, und wobei die sanitäre Vorrichtung derart ausgebildet ist, dass sie mobil bzw. tragbar ist.

Der Vorteil dieser Erfindung liegt insbesondere darin, dass nachdem Haustiere ihre physiologischen Bedürfnisse auf der Oberfläche der Vorrichtung befriedigt haben, eine Spülung durch Sensoren eingeleitet wird, so dass die abgegebenen Haustier-Exkrementen auf eine automatisierte Weise von der Oberfläche der Vorrichtung beseitigt werden. Dank dieser Erfindung kann also eine hygienische Möglichkeit geschaffen werden, wie Haustiere die physiologischen Bedürfnisse selbständig und auf eine saubere Weise erledigen können. Zudem wird durch die mobile bzw. tragbare Bauweise ermöglicht, dass die erfindungsgemässe sanitäre Vorrichtung sehr einfach an verschiedenen Orten eingesetzt werden kann. Besonders vorteilhaft kann eine erfindungsgemässe sanitäre Vorrichtung auch beim Reisen mit Haustieren verwendet werden, da sie sehr einfach von einem Ort an den anderen verschoben und/oder dank angepassten Baumassen auch einfach transportiert werden kann. Ausserdem kann dank dem integrierten Abwasser-Behälter die erfindungsgemässe Vorrichtung praktisch an beliebigen Stellen verwendet werden, da die beim Betrieb weggespülten Exkremente direkt vor Ort entsorgt werden können.

Gemäss einer vorteilhaften Ausführungsvariante der vorliegenden Erfindung ist eine Antriebseinheit vorgesehen, mittels welcher das Spülmittel auf die Oberfläche abgebbar ist. Diese Antriebseinheit kann dabei insbesondere eine elektrisch betriebene Flüssigkeitspumpe sein. Der wichtigste Vorteil dieser Ausführungsvariante liegt darin, dass das Spülmittel gezielt auf die Oberfläche der sanitären Vorrichtung abgegeben werden kann. Zudem kann dank der Verwendung einer elektrisch betriebenen Flüssigkeitspumpe der nötige Druck erzeugt werden, dank welchem die Oberfläche effizient von den Exkrementen befreit werden kann.

In einer anderen Ausführungsvariante der vorliegenden Erfindung umfasst die sanitäre Vorrichtung einen Spülmittel-Behälter, aus welchem das Spülmittel auf die Oberfläche abgebbar ist. Dank diesem integrierten Spülmittel-Behälter kann stets ein genügender Vorrat an Spülmittel gewährleistet werden, wodurch eine korrekte Verwendung der Vorrichtung ermöglicht wird.

Alternativ (oder zusätzlich) zu diesem Spülmittel-Behälter kann die sanitäre Vorrichtung auch einen Anschluss umfassen, mittels welchem die sanitäre Vorrichtung an eine externe Spülmittel-Zufuhr anschliessbar ist. In diesem Fall kann die Autonomie der erfindungsgemässen sanitären Vorrichtung erhöht werden, indem nicht nur das im integrierten Behälter aufbewahrte Spülmittel benutzt werden kann.

Diese Möglichkeit ist insbesondere vorteilhaft, wenn reines bzw. mit einem Haustier-Lockstoff versehenes Wasser als Spülmittel verwendet wird. In diesem Fall kann das Wasser entweder in einem integrierten Behälter aufbewahrt werden, oder die sanitäre Vorrichtung kann direkt an die gewöhnliche Wasserleitung angeschlossen werden. Kombinationen der beiden Optionen sind selbstverständlich auch denkbar. Dank dem Lockstoff für Haustiere kann zudem ein erzieherischer Effekt erreicht werden, indem die Haustiere durch den verwendeten Lockstoff zur sanitären Vorrichtung hin gelockt werden. Als Lockstoff können beispielsweise handelsübliche Lockstoffe zur Erziehung von Hundewelpen u.ä. verwendet werden.

Zusätzlich zum Abwasser-Behälter kann die sanitäre Vorrichtung auch einen Abwasser-Anschluss umfassen, mittels welchem die von der Oberfläche weggespülten Exkremente und das Spülmittel direkt an das Abwasserleitungs-System anschliessbar ist. Diese Variante der vorliegenden Erfindung hat den Vorteil, dass die Kontrolle des Abwasser-Behälters ausgelassen werden kann. In der Tat können sämtliche Abwasser bei dieser Ausführungsvariante direkt entsorgt werden, wodurch ein Überlaufen des Abwasser-Behälters ausgeschlossen werden kann.

Vorteilhaft kann die sanitäre Vorrichtung mindestens eine Spüldüse umfassen, über welche das Spülmittel auf die Oberfläche abgebbar ist. Dank den Spüldüsen kann die Abgabe des Spülmittels besser kontrolliert und gezielter vorgenommen werden. Dadurch kann die Effizienz erhöht werden, wobei Kosten gleichzeitig niedriger gehalten werden.

Schliesslich kann die sanitäre Vorrichtung vorteilhaft ein Gehäuse umfassen, das aus rostfreiem Stahl und/oder Kunststoff und/oder Kohlenstofffasern ist. Rostfreier Stahl, Kunststoff und die Kohlenstofffaser haben den Vorteil, dass ihre Oberfläche gut gereinigt werden kann, wodurch auch erhöhten hygienischen Ansprüchen Rechnung getragen werden kann. Ausserdem sind Kunststoff und Kohlenstofffasern leicht, was die Mobilität bzw. die Tragbarkeit der sanitären Vorrichtung erleichtert.

In einer Ausführungsvariante der Erfindung ist der Sensor als Drucksensor ausgebildet, welcher durch den Druckunterschied vor und nach dem Besteigen der Oberfläche der sanitären Vorrichtung durch das Haustier aktivierbar ist. Dank der Verwendung eines solchen Sensors kann die Abgabe des Spülstoffs sehr präzise geregelt werden.

In einer anderen Ausführungsvariante der Erfindung ist der Sensor als Bewegungssensor bzw. Bewegungsmelder ausgebildet, welcher durch das Besteigen auf und das Absteigen des Haustiers von der Oberfläche der sanitären Vorrichtung aktivierbar ist. Die Verwendung eines solchen Sensors hat den zusätzlichen Vorteil, dass die Oberfläche der sanitären Vorrichtung nach jedem Besteigen nach Bedarf gereinigt werden kann, was zu einer erhöhten Hygiene der Oberfläche führt.

Zum einfacheren Tragen bzw. Transportieren der sanitären Vorrichtung kann diese Mittel zum Tragen bzw. Transportieren umfassen. Beispielsweise können diese Mittel zum Tragen bzw. Transportieren als ausziehbare und/oder an- und abmontierbare Tragegriffe ausgebildet sein.

An dieser Stelle soll erwähnt werden, dass sich die vorliegende Erfindung neben der beschriebenen erfindungsgemässen sanitären Vorrichtung auch auf die Benutzung der entsprechenden Vorrichtung bezieht.

### Kurze Beschreibung der Zeichnungen

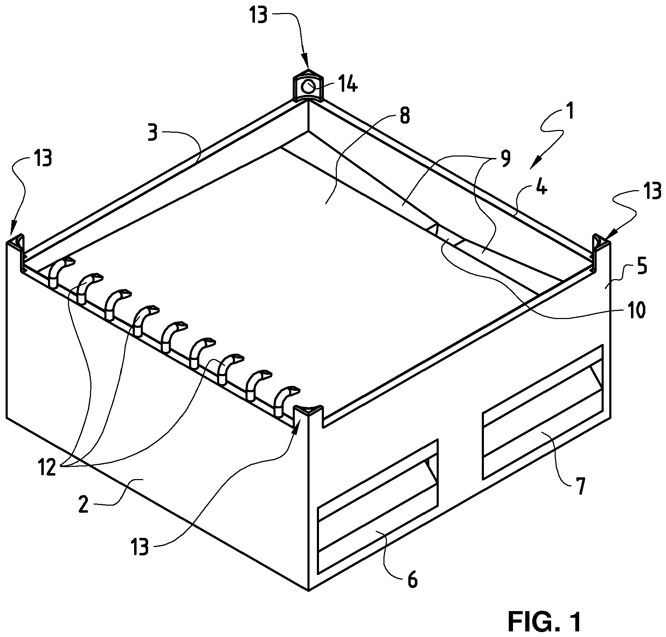

Nachfolgend werden verschiedene Ausführungsvarianten der vorliegenden Erfindung anhand von Beispielen beschrieben. Die Beispiele der Ausführungen werden durch beigelegte Figuren 1 bis 3 illustriert, in welchen eine bevorzugte Ausführungsform der sanitären Vorrichtung gemäss der vorliegenden Erfindung schematisch dargestellt wird, und zwar:
Figur 1 zeigt eine perspektivische Ansicht einer sanitären Vorrichtung gemäss einer Ausführungsvariante der vorliegenden Erfindung;
Figur 2 zeigt eine perspektivische Explosionsansicht der sanitären Vorrichtung gemäss der Ausführungsvariante der vorliegenden Erfindung aus Figur 1; und
Figur 3 zeigt eine Schnittdarstellung durch die sanitäre Vorrichtung gemäss der Ausführungsvariante der vorliegenden Erfindung aus den Figuren 1 und 2.

### Beschreibung der Ausführungsvarianten der Erfindung

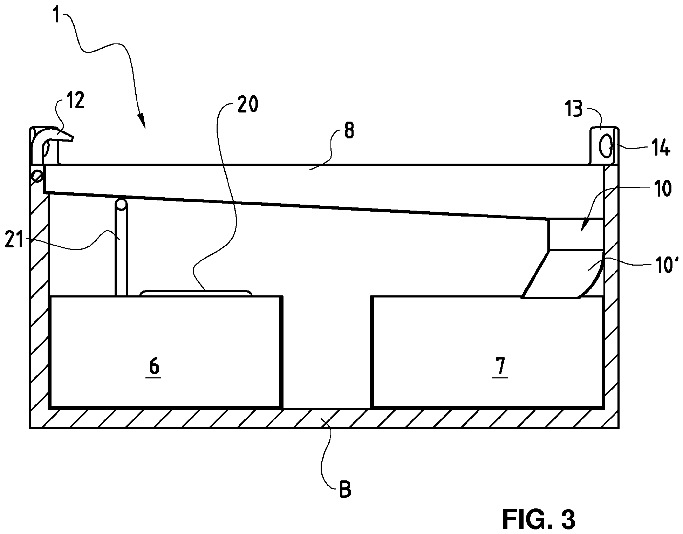

Die Figur 1 zeigt schematisch eine Ausführungsform der sanitären Vorrichtung 1 für Haustiere gemäss der vorliegenden Erfindung. Diese sanitäre Vorrichtung 1 umfasst ein Gehäuse, welches in Figur 1 aus vier Seitenwänden 2, 3, 4, 5 sowie einem Boden B (sichtbar in Figur 3) zusammengesetzt ist. Die Seitenwände 2, 3, 4, 5 stehen zueinander unter einem rechten Winkel, so dass die sanitäre Vorrichtung 1 aus Figur 1 im Grundriss im Wesentlichen die Form eines Quadrats aufweist. Selbstverständlich ist es aber durchaus denkbar, eine sanitäre Vorrichtung 1 zu bauen, bei welcher die Seitenwände 2, 3, 4, 5 zueinander nicht unter dem rechten Winkel stehen, so dass diese eine andere Form aufweist. Auch ist es ohne weiteres denkbar, eine sanitäre Vorrichtung 1 zu bauen, welche weniger als vier Seitenwände umfasst, beispielsweise auch eine runde oder ovale sanitäre Vorrichtung 1 (also mit einer einzigen Seitenwand).

Das Gehäuse der sanitären Vorrichtung 1 bzw. die entsprechenden Seitenwände 2, 3, 4, 5 können vorteilhaft aus rostfreiem Stahl angefertigt werden. Allerdings sind auch andere Materialien durchaus denkbar, insbesondere Kunststoff oder Kohlenstofffasern.

Wie bereits erwähnt, eignet sich die erfindungsgemässe sanitäre Vorrichtung 1 insbesondere für Hunde, aber sie kann nach Bedarf durchaus auch von anderen Tieren (nicht nur Haustieren) verwendet werden.

Die Seitenwände 2, 3, 4, 5 der sanitären Vorrichtung 1 bilden (zusammen mit dem Boden B) einen Innenraum, welcher nach oben durch die Oberfläche 8 begrenzt ist. Diese Oberfläche 8 ist also derart angeordnet, dass Tiere diese Oberfläche 8 besteigen und dann ihre Exkremente darauf abscheiden können. Im Prinzip sollen die Tiere die Vorrichtung 1 derart besteigen können, dass sie ihre Exkremente (den Urin und/oder den Stuhlgang) auf natürliche Weise lassen können.

Die sanitäre Vorrichtung 1 ist derart ausgebildet, dass sie mobil bzw. tragbar ist. Hierzu kann sie entsprechende Mittel zum Tragen bzw. Transportieren umfassen (nicht illustriert). Diese Mittel können zum Beispiel ausziehbare Tragegriffe sein, welche in den Seitenwänden 2, 3, 4, 5 untergebracht sind und zum Tragen der sanitären Vorrichtung 1 ausgezogen und nach dem Transportieren wieder eingezogen werden können. Auch können Vorrichtungen vorgesehen werden, mittels welchen solche Tragegriffe oder andere geeignete Elemente (z.B. Tragegurte o.ä.) an der sanitären Vorrichtung 1 an- und abmontiert werden können.

Wie in Figur 1 gesehen werden kann, ist die Oberfläche 8 der sanitären Vorrichtung leicht nach links abfallend und wird am linken Rand zusätzlich durch zwei etwas stärker geneigte Teilflächen 9 abgeschlossen. Diese beiden Teilflächen 9 der Oberfläche 8 enden etwa in der Mitte der Seitenwand 4 in einer Öffnung 10. Diese besondere Ausgestaltung der Oberfläche 8 dient (in Zusammenarbeit mit weiteren Elementen) dazu, dass die erfindungsgemässe sanitäre Vorrichtung 1 automatisiert gereinigt werden kann, wie im Folgenden erläutert wird.

Die sanitäre Vorrichtung 1 in Figur 1 umfasst nämlich vier Sensoren 14, welche sich an den vier Ecken der Vorrichtung 1 befinden. Hierzu sind die Ecken der Seitenwände 2, 3, 4, 5 jeweils etwas verlängert, so dass sie entsprechende Sensor-Aufnahmen bilden. Selbstverständlich ist es aber möglich, eine erfindungsgemässe sanitäre Vorrichtung 1 vorzusehen, welche mehr oder weniger als vier Sensoren umfasst, oder aber eine erfindungsgemässe sanitäre Vorrichtung 1, in welcher diese Sensoren an anderen Stellen bzw. auf eine andere Weise angeordnet sind. Die Sensoren 14 können auf viele verschiedene Weisen ausgebildet sein, aber sie erlauben auf jeden Fall, die Anwesenheit von Exkrementen auf der Oberfläche 8 und/oder das Absteigen der Haustiere von der Oberfläche 8 zu erfassen. So sind beispielsweise Drucksensoren möglich, welche durch die Änderung des Drucks auf der Oberfläche 8 aktiviert werden, oder auch Temperatursensoren, mittels welchem eine erhöhte Temperatur der Oberfläche 8 registriert werden kann. Auch sind Bewegungssensoren (zum Beispiel Lichtschranken) bzw. Bewegungsmelder oder ähnliche Komponenten denkbar. Ein Bewegungssensor retourniert einen Wert oder ein Signal (zum Beispiel eine Spannung), nachdem eine Bewegung detektiert wird. Bei einem Bewegungsmelder wird beim Feststellen einer Bewegung ein binärer Wert retourniert. Somit gibt ein Bewegungssensor unter anderem auch darüber Auskunft, wie gross die Distanz zwischen dem Tier und dem Sensor ist. Ein Bewegungsmelder hingegen gibt vor allem die Information, ob ein Tier anwesend ist oder nicht. Die jeweilige Schwelle(n) können insbesondere auch einstellbar sein. Ein Fachmann wird auf jeden Fall in der Lage sein, Sensoren 14 so zu gestalten, dass sie ihre Aufgabe korrekt erfüllen können.

Nachdem die Anwesenheit der Exkremente auf der Oberfläche 8 bzw. das Absteigen der Haustiere von der Oberfläche 8 mittels der Sensoren 14 detektiert wird, wird gemäss der erfindungsgemässen sanitären Vorrichtung 1 ein Spülmittel auf die Oberfläche 8 abgegeben, so dass die darauf präsenten Exkremente von der Oberfläche 8 weggespült werden. In diesem Zusammenhang sind die oben erwähnte leichte Neigung der Oberfläche 8 und die etwas stärker geneigten Bereiche 9 von Vorteil, da dadurch der natürliche Fluss des Spülmittels unterstützt werden kann. Natürlich kann aber auch eine Lösung vorgesehen werden, bei welcher die Oberfläche 8 anders ausgebildet ist, und beispielsweise keine geneigten Bereiche umfasst.

Die sanitäre Vorrichtung 1 in Figur 1 umfasst jedoch Spüldüsen 12, über welche das Spülmittel auf die Oberfläche 8 abgegeben wird. Auch diese Düsen 12 können aber durchaus anders aussehen oder anderweitig angeordnet sein als in Figur 1 schematisch dargestellt. Sie können insbesondere so angeordnet werden, dass ein gezieltes Wegspülen der Exkremente von der gesamten Oberfläche 8 ermöglicht wird.

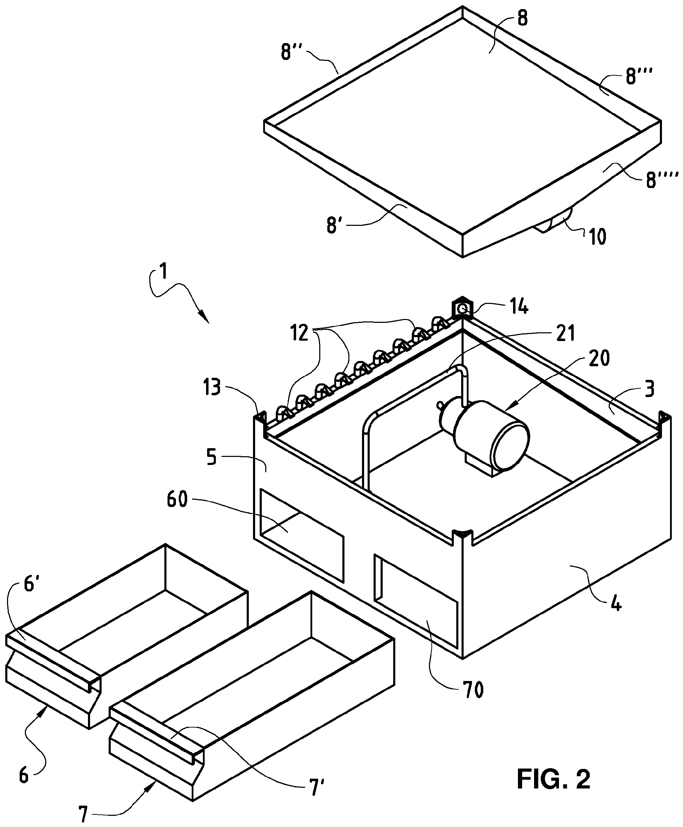

Die sanitäre Vorrichtung 1 in Figur 1 umfasst zudem zwei Behälter 6, 7, welche (wie in Figur 2 gut gesehen werden kann) vorteilhaft als ausziehbare Schubladen verwendet werden können, wozu in der Seitenwand 5 entsprechende Öffnungen 60, 70 vorgesehen sind. Zu diesem Zweck umfassen die Behälter 6, 7 die entsprechenden Griffe 6', 7', wobei auch andere Lösungen durchaus denkbar sind.

Der erste Behälter 6 ist der Spülmittel-Behälter, er enthält also einen Vorrat an Spülmittel, welches auf die Oberfläche 8 über die Düsen 12 abgegeben wird. Bei diesem Spülmittel kann es sich beispielsweise um Wasser handeln. Es ist jedoch durchaus denkbar, andere Flüssigkeiten oder Flüssigkeitsgemische zu verwenden. Auch können dem benutzten Spülmittel verschiedene Zusatzstoffe beigemischt werden, beispielsweise Putz- oder Desinfektionsmittel. Ein weiterer Zusatzstoff kann ein Tier-Lockstoff sein, welcher das Tier zur sanitären Vorrichtung 1 hin anlockt. Solche Stoffe werden oft für die Erziehung von jungen Tieren verwendet.

Der Spülmittel-Behälter 6 kann nach Bedarf ausgezogen werden, um das Spülmittel nachzutanken. Allerdings kann durchaus auch vorgesehen werden, dass die sanitäre Vorrichtung 1 über einen geeigneten Anschluss an eine externe Spülmittel-Zufuhr (z.B. eine reguläre Wasserleitung) anschliessbar ist. Das Nachfüllen des Spülmittels kann in dem Fall auch automatisiert erfolgen, zum Beispiel indem ein weiterer Sensor die Wasserzufuhr einschaltet, wenn der Spülmittelstand einen vordefinierten Mindestwert unterschreitet. Auch ist denkbar, das Spülmittel direkt aus dieser externen Zufuhr (also nicht zunächst über einen internen Speicher im Behälter 6)abzugeben.

Um das Spülmittel aus dem Behälter 6 zum Wegspülen der Exkremente auf die Oberfläche 8 abzugeben, umfasst die erfindungsgemässe sanitäre Vorrichtung 1 in Figur 2 auch eine entsprechende Antriebseinheit 20. Diese Antriebseinheit 20 kann eine elektrisch angetriebene Flüssigkeitspumpe sein, auch andere Lösungen sind aber ohne weiteres denkbar. Die Grösse bzw. die Leistung dieser Antriebseinheit 20 kann variieren, in Abhängigkeit von den konkreten Bedürfnissen.

Wenn die elektrisch angetriebene Flüssigkeitspumpe verwendet wird, kann sie entweder über die reguläre Stromanspeisung, oder aber dank einem (nicht dargestellten) Akkumulator durch elektrische Energie versorgt werden. In Figur 2 ist ausserdem eine Leitung 21 sichtbar, über welche das Spülmittel aus dem Behälter 6 angesaugt und an die Düsen 12 abgegeben werden kann. Obwohl die Antriebseinheit 20 hier im Innern der sanitären Vorrichtung 1 dargestellt ist, kann sie nach Bedarf ohne weiteres ebenfalls ausserhalb der Vorrichtung 1 angeordnet und über geeignete Leitungen mit der Vorrichtung 1 verbunden werden.

Der zweite Behälter 7 bei der sanitären Vorrichtung 1 ist der Abwasser-Behälter. Der Behälter 7 dient also dazu, die von der Oberfläche 8 weggespülten Exkremente sowie das Spülmittel aufzunehmen. Wie in Figur 3 gut gesehen werden kann, ist die Oberfläche 8 über die entsprechende Öffnung 10 und den Abfluss 10' mit dem Behälter 7 verbunden, so dass die dank der Neigung der Oberfläche 8 abfliessenden Flüssigkeiten zusammen mit dem mitgenommenen Exkrementen im Behälter 7 landen.

Nachdem der Abwasser-Behälter 7 gefüllt ist, kann dieser ausgezogen werden und das Abwasser (d.h. die weggespülten Exkrementen zusammen mit dem Spülmittel) auf eine geeignete Weise entsorgt werden. Jedoch kann auch hier alternativ oder zusätzlich zum Behälter 7 vorgesehen werden, dass die sanitäre Vorrichtung 1 über einen geeigneten Anschluss an eine externe Abwasserleitung angeschlossen werden kann. Damit können die sich im Behälter 7 angesammelten Exkremente und das Abfall-Spülmittel direkt über die Abwasserleitungen entsorgt werden.

In Figur 2 kann ausserdem gesehen werden, dass die Oberfläche 8 als eine Art Deckel ausgebildet werden kann, mit den erhöhten Seitenrändern 8', 8", 8"', 8"", dank welchen ein Überlaufen des Spülmittels (oder des Urins) verhindert werden kann. Insbesondere im Zusammenhang mit dem Urin kann vorgesehen werden, dass die Seitenwände 2, 3, 4, 5 des Gehäuses und/oder die Seitenränder 8', 8", 8'", 8"" der Oberfläche 8 so ausgebildet werden, dass sie eine genügende Höhe aufweisen, so dass die Tiere beim urinieren immer die Oberfläche 8 treffen.

Schliesslich muss noch angedeutet werden, dass die vorliegende Erfindung nicht auf die beschriebenen Ausführungsformen beschränkt ist. Einem Fachmann wird ohne weiteres klar sein, dass Weiterentwicklungen und Abänderungen im Rahmen der geschützten Erfindung ohne weiteres möglich sind. So können beispielsweise in der sanitären Vorrichtung nach Bedarf auch weitere Elemente eingesetzt werden, wenn sie weitere Funktionen erfüllen, oder für einen anderweitigen Einsatz verwendet werden soll. Beispielsweise können Filter vorgesehen werden, mittels welchen das Spülmittel und/oder das Abwasser gefiltert werden kann. Diese und andere entsprechende Massnahmen bzw. Anpassungen fallen jedoch ohne weiteres in den Schutzbereich der Erfindung, welcher durch die nachfolgenden Patentansprüche definiert wird.

## Patentansprüche

1. Sanitäre Vorrichtung (1) für Haustiere mit einer Oberfläche (8), welche Haustiere besteigen und auf welcher sie Exkremente abscheiden können, umfassend mindestens einen Sensor (14), mittels welchem die Anwesenheit von Exkrementen auf und/oder das Absteigen des Haustiers von der Oberfläche (8) erfassbar sind, wobei beim Erfassen der Anwesenheit der Exkremente auf und/oder des Absteigens des Haustiers von der Oberfläche (8) ein Spülmittel derart auf die Oberfläche (8) abgebbar ist, dass die darauf präsenten Exkremente von der Oberfläche (8) wegspülbar sind,
wobei die sanitäre Vorrichtung (1) derart ausgebildet ist, dass sie mobil bzw. tragbar ist,
**dadurch gekennzeichnet,**
**dass** die sanitäre Vorrichtung (1) einen integrierten Abwasser-Behälter (7) umfasst, in welchem die von der Oberfläche (8) weggespülten Exkremente und das Spülmittel entsorgbar sind.

2. Sanitäre Vorrichtung nach Anspruch 1, **dadurch gekennzeichnet, dass** eine Antriebseinheit (20) vorgesehen ist, mittels welcher das Spülmittel auf die Oberfläche (8) abgebbar ist.

3. Sanitäre Vorrichtung nach Anspruch 2, **dadurch gekennzeichnet, dass** die Antriebseinheit (20) eine elektrisch betriebene Flüssigkeitspumpe ist.

4. Sanitäre Vorrichtung nach einem der Ansprüche 1 bis 3, **dadurch gekennzeichnet, dass** die sanitäre Vorrichtung (1) einen Spülmittel-Behälter (6) umfasst, aus welchem das Spülmittel auf die Oberfläche (8) abgebbar ist.

5. Sanitäre Vorrichtung nach einem der Ansprüche 1 bis 4, **dadurch gekennzeichnet, dass** die sanitäre Vorrichtung (1) einen Anschluss umfasst, mittels welchem die sanitäre Vorrichtung (1) an eine externe Spülmittel-Zufuhr anschliessbar ist.

6. Sanitäre Vorrichtung nach einem der Ansprüche 1 bis 5, **dadurch gekennzeichnet, dass** das Spülmittel reines bzw. mit einem Haustier-Lockstoff versehenes Wasser ist.

7. Sanitäre Vorrichtung nach einem der Ansprüche 1 bis 6, **dadurch gekennzeichnet, dass** die sanitäre Vorrichtung (1) einen Abwasser-Anschluss umfasst, mittels welchem die von der Oberfläche (8) weggespülten Exkremente und das Spülmittel an das Abwasserleitungs-System anschliessbar ist.

8. Sanitäre Vorrichtung nach einem der Ansprüche 1 bis 7, **dadurch gekennzeichnet, dass** die sanitäre Vorrichtung (1) mindestens eine Spüldüse (12) umfasst, über welche das Spülmittel auf die Oberfläche (8) abgebbar ist.

9. Sanitäre Vorrichtung nach einem der Ansprüche 1 bis 8, **dadurch gekennzeichnet, dass** die sanitäre Vorrichtung (1) ein Gehäuse (2, 3, 4, 5) umfasst, das aus rostfreiem Stahl und/oder Kunststoff und/oder Kohlenstofffasern ist.

10. Sanitäre Vorrichtung nach einem der Ansprüche 1 bis 9, **dadurch gekennzeichnet, dass** der Sensor (14) als Drucksensor ausgebildet ist, welcher durch den Druckunterschied vor und nach dem Besteigen der Oberfläche (8) der sanitären Vorrichtung (1) durch das Haustier aktivierbar ist.

11. Sanitäre Vorrichtung nach einem der Ansprüche 1 bis 9, **dadurch gekennzeichnet, dass** der Sensor (14) als Bewegungssensor bzw. Bewegungsmelder ausgebildet ist, welcher durch das Besteigen auf und das Absteigen des Haustiers von der Oberfläche (8) der sanitären Vorrichtung (1) aktivierbar ist.

12. Sanitäre Vorrichtung nach einem der Ansprüche 1 bis 11, **dadurch gekennzeichnet, dass** die sanitäre Vorrichtung (1) Mittel zum Tragen bzw. Transportieren umfassen.

13. Sanitäre Vorrichtung nach Anspruch 12, **dadurch gekennzeichnet, dass** die Mittel zum Tragen bzw. Transportieren als ausziehbare und/oder an- und abmontierbare Tragegriffe und/oder Tragegurte ausgebildet sind.

## Claims

1. Sanitary device (1) for domestic animals with a surface (8), which domestic animals mount and on which they are able to excrete excrement, comprising at least one sensor (14), by means of which the presence of excrement on, and/or the dismounting of the domestic animal from, the surface (8) are able to be detected, whereby upon detection of the presence of excrement on, and/or the dismounting of the domestic animal from, the surface (8), a rinsing agent is able to be dispensed on the surface (8) in such a way that the excrement present thereon is able to be flushed away from the surface (8),
whereby the sanitary device (1) is designed in such a way that it is movable or respectively portable,
**characterized**
**in that** the sanitary device (1) comprises an integrated waste water container (7), in which the excrement flushed away from the surface (8) and the rinsing agent are able to be disposed of.

2. Sanitary device according to claim 1, **characterized in that** a drive unit (20) is provided by means of which the rinsing agent is able to be dispensed on the surface (8).

3. Sanitary device according to claim 2, **characterized in that** the drive unit (20) is an electrically driven fluid pump.

4. Sanitary device according to one of the claims 1 to 3, **characterized in that** the sanitary device (1) comprises a rinsing agent container (6), from which the rinsing agent is able to be dispensed on the surface (8).

5. Sanitary device according to one of the claims 1 to 4, **characterized in that** the sanitary device (1) comprises a connection, by means of which the sanitary device (1) is connectible to an external rinsing agent supply.

6. Sanitary device according to one of the claims 1 to 5, **characterized in that** the rinsing agent is pure water or water provided with a domestic animal attractant.

7. Sanitary device according to one of the claims 1 to 6, **characterized in that** the sanitary device (1) comprises a waste water connection by means of which the excrement flushed away from the surface (8) and the rinsing agent is connectible to the sewage system.

8. Sanitary device according to one of the claims 1 to 7, **characterized in that** the sanitary device (1) comprises at least one flushing nozzle (12), via which the rinsing agent is able to be dispensed on the surface (8).

9. Sanitary device according to one of the claims 1 to 8, **characterized in that** the sanitary device (1) comprises a housing (2, 3, 4, 5), which is made of stainless steel and/or plastic and/or carbon fibres.

10. Sanitary device according to one of the claims 1 to 9, **characterized in that** the sensor (14) is designed as pressure sensor, which is able to be activated by means of the pressure difference before and after the mounting of the surface (8) of the sanitary device (1) by the domestic animal.

11. Sanitary device according to one of the claims 1 to 9, **characterized in that** the sensor (14) is designed as motion sensor or respectively motion detector, which is able to be activated by the mounting on, and dismounting from, the surface (8) of the sanitary device (1) by the domestic animal.

12. Sanitary device according to one of the claims 1 to 11, **characterized in that** the sanitary device (1) comprises means for carrying or respectively transporting.

13. Sanitary device according to claim 12, **characterized in that** the means of carrying or respectively transporting are designed as extendible and/or attachable and removable carrying handles and/or carrying straps.

## Revendications

1. Dispositif sanitaire (1) pour animaux domestiques comportant une surface (8) sur laquelle les animaux domestiques montent, et sur laquelle ils font leurs excréments, comprenant au moins un capteur (14), au moyen duquel la présence d'excréments sur la surface (8) et/ou la descente de l'animal domestique de la surface (8) peuvent être détectées, un produit de rinçage pouvant être dispensé sur la surface (8) au moment de la détection de la présence de l'excrément sur la surface (8) et/ou de la descente de l'animal domestique de la surface (8), de telle sorte que les excréments présents sur celle-ci puissent être évacués de la surface (8),
le dispositif sanitaire (1) étant conçu de manière à être mobile ou respectivement portable,
**caractérisé en ce que**
le dispositif sanitaire (1) comprend un récipient à eaux usées intégré (7), dans lequel les excréments évacués de la surface (8) et le produit de rinçage peuvent être éliminés.

2. Dispositif sanitaire selon la revendication 1, **caractérisé en ce qu'**une unité motrice (20) est prévue, au moyen de laquelle le produit de rinçage peut être dispensé sur la surface (8).

3. Dispositif sanitaire selon la revendication 2, **caractérisé en ce que** l'unité motrice (20) est une pompe à liquide entraînée électriquement.

4. Dispositif sanitaire selon l'une des revendications 1 à 3, **caractérisé en ce que** le dispositif sanitaire (1) comprend un récipient (6) pour le détergent, à partir duquel le produit de rinçage peut être dispensé sur la surface (8).

5. Dispositif sanitaire selon l'une des revendications 1 à 4, **caractérisé en ce que** le dispositif sanitaire (1) comprend une connexion, au moyen de laquelle le dispositif sanitaire (1) peut être raccordé à une réserve externe de produit de rinçage.

6. Dispositif sanitaire selon l'une des revendications 1 à 5, **caractérisé en ce que** le produit de rinçage est de l'eau pure ou de l'eau contenant un appât à animal domestique.

7. Dispositif sanitaire selon l'une des revendications 1 à 6, **caractérisé en ce que** le dispositif sanitaire (1) comprend un raccordement aux eaux usées au moyen de laquelle l'excrément est évacué de la surface (8) et le produit de rinçage peut être raccordé au système d'égouts.

8. Dispositif sanitaire selon l'une des revendications 1 à 7, **caractérisé en ce que** le dispositif sanitaire (1) comprend au moins une buse de rinçage (12), par laquelle le produit de rinçage peut être dispensé sur la surface (8).

9. Dispositif sanitaire selon l'une des revendications 1 à 8, **caractérisé en ce que** le dispositif sanitaire (1) comprend un logement (2, 3, 4, 5) fait d'acier inoxydable et/ou de plastique et/ou de fibres de carbone.

10. Dispositif sanitaire selon l'une des revendications 1 à 9, **caractérisé en ce que** le capteur (14) consiste en un capteur de pression, qui peut être activé au moyen de la différence de pression mesurée avant et après que l'animal ne soit monté sur la surface (8) du dispositif sanitaire (1).

11. Dispositif sanitaire selon l'une des revendications 1 à 9, **caractérisé en ce que** le capteur (14) consiste en un capteur de mouvement ou respectivement un détecteur de mouvement, qui peut être activé par la montée sur la surface (8) du dispositif sanitaire (1) et la descente de celle-ci par l'animal domestique.

12. Dispositif sanitaire selon l'une des revendications 1 à 11, **caractérisé en ce que** le dispositif sanitaire (1) comprend un moyen de port ou respectivement de transport.

13. Dispositif sanitaire selon la revendication 12, **caractérisé en ce que** le moyen de port ou respectivement de transport est conçu en tant que poignées de transport extensibles et/ou démontables et/ou en tant que sangles de transport.
